# EUROPÄISCHE PATENTSCHRIFT

(11) **EP 3 017 680 B1**
(45) Veröffentlichungstag und Bekanntmachung des Hinweises auf die Patenterteilung: **26.06.2019**
(21) Anmeldenummer: 15401112.6
(22) Anmeldetag: 30.10.2015
(51) Int. Cl.: A01C 21/00, A01C 17/00

(54) **VERFAHREN ZUR BESTIMMUNG DER VERTEILCHARAKTERISTIK EINER VERTEILMASCHINE SOWIE EINE VERTEILMASCHINE ZUR DURCHFÜHRUNG EINES SOLCHEN VERFAHRENS**
METHOD FOR DETERMINING THE DISTRIBUTION CHARACTERISTIC OF A DISTRIBUTION MACHINE AND DISTRIBUTION MACHINE FOR CARRYING OUT SUCH A METHOD
PROCÉDÉ DE DÉTERMINATION DE LA CARACTÉRISTIQUE D'ÉPANDAGE D'UN ÉPANDEUR ET ÉPANDEUR DESTINÉ À EXÉCUTER UN TEL PROCÉDÉ

(30) Priorität: 04.11.2014 DE 102014116025
(43) Veröffentlichungstag der Anmeldung: 11.05.2016
(73) Patentinhaber: Amazonen-Werke H. Dreyer GmbH & Co. KG, 49205 Hasbergen (DE)
(72) Erfinder: Dreyer, Justus, 49076 Osnabrück (DE); Rahe, Florian, 49504 Lotte (DE); Wessels, Thomas, 49080 Osnabrück (DE); Ströbel-Fröschle, Markus, 49124 Georgsmarienhütte (DE)

(56) Entgegenhaltungen:
- EP-A1- 2 756 745
- EP-A2- 2 777 376
- DE-A1- 19 723 359

## Beschreibung

Die Erfindung betrifft ein Verfahren zur Bestimmung der Verteilcharakteristik einer Verteilmaschine gemäß dem Oberbegriff des Patentanspruches 1 sowie eine Verteilmaschine zur Durchführung eines solchen Verfahrens gemäß dem Oberbegriff des unabhängigen Patentanspruchs 7.

Verteilmaschinen, ausgebildet als Zentrifugalstreuer, welche typischerweise landwirtschaftliches Gut von zumindest einer, vorzugsweise zwei, Schleuderscheiben mittels auf den Schleuderscheiben angeordneten, typischerweise jeweils zwei, Wurfschaufeln verteilen sind seit geraumer Zeit Stand der Technik. Das Streugut wird mittels der auf der rotierenden Schleuderscheibe angeordneten Wurfschaufeln durch die auftretenden Zentrifugalkräfte in radialer Richtung beschleunigt und auf diese Weise verteilt. Die Wurfweite und Geometrie des Streufächers, also des Bereichs in dem das Streugut verteilt wird, hängt hierbei von verschiedensten Faktoren ab:
- Die Geometrie der Schleuderscheibe beeinflusst unter anderem den vertikalen Abwurfwinkel.
- Die Anordnung der Wurfschaufel auf der Schleuderscheibe sowie Länge und Geometrie der Wurfschaufel beeinflusst die Abwurfgeschwindigkeit und Flugrichtung des Streugutes.
- Die Beschaffenheit des Streugutes (Korngröße, Korngeometrie und Dichte) beeinflusst die Abwurfgeschwindigkeit und damit die Wurfweite.
- Der Auftreffpunkt des Streugutes auf der Schleuderscheibe beeinflusst die Abwurfgeschwindigkeit sowie den horizontalen Abwurfwinkel
- Die Schleuderscheibendrehzahl hat ebenso Auswirkungen auf die Abwurfgeschwindigkeit

Die zunehmende Präzisierung in der Landtechnik, welche eine Vermeidung von Umweltbelastungen und unnötigen Kosten sowie Schonung von Ressourcen zum Ziel hat, verlangt nach immer detaillierteren Einstellmöglichkeiten der landtechnischen Maschinen. Für die Schleuderstreuer gilt entsprechend, dass nicht nur die Menge des aufgebrachten Streugutes, sowie die Schleuderscheibendrehzahl einstellbar sind. Vielmehr kann inzwischen auch der Auftreffpunkt des Streugutes auf die Schleuderscheibe sowie die Schleuderschaufelgeometrie angepasst werden. Auch spezielle Vorrichtungen zur Verteilung des Streugutes in Randbereichen einer landwirtschaftlichen Fläche sind bekannt.

Das Einstellen der verschiedenen Parameter erfolgt mit Hilfe von Tabellen, Formeln und/oder Graphen in denen in Abhängigkeit des Streuparameters, beispielsweise der Schleuderscheibendrehzahl für eine bestimmte Schleuderscheibe, Wurfschaufel und Aufgabepunkt, der mittlere horizontale Abwurfwinkel, also der Abwurfwinkel relativ zu einer Linie, welche vom Zentrum der Schleuderscheibe aus entgegen der Fahrtrichtung in radialer Richtung gezogen wird, und die mittlere Wurfweite angegeben ist. Genauso können Tabellen, Formeln und/oder Graphen vorliegen, für deren Erstellung andere Größen variiert, konstant gehalten und gemessen wurden (DE 36 17 377 C2, DE 33 10 424 C2).

Ebenso ist es Stand der Technik den Abwurfwinkel mittels Sensoren zu bestimmen und entsprechend obiger Tabellen, Formeln und/oder Graphen bei Abweichung zu einem vorgegebenen Sollwert Anpassungen an den genannten Parametern vorzunehmen (DE 38 87 218T2, DE 197 23 359 A1). Hierbei ist insbesondere vorgesehen die Massenverteilung des Streugutes während des Verteilprozesses zu detektieren. Um hierbei ein zufriedenstellendes Ergebnis zu erzielen, ist es beispielsweise erforderlich entweder einen Sensor in kleinen Schritten über die Breite des Streubereiches zu bewegen, um die Querverteilung des Streugutes zu bestimmen, was einen großen Zeitaufwand bedeutet. Alternativ können viele Sensoren so angeordnet werden, dass eine Erfassung des gesamten Streubereiches sichergestellt wird, hierbei ist zu beachten, dass jeder Sensor über den jeweiligen Messbereich mittelt, so dass jeder Sensor nur einen einzigen Datenpunkt liefert. Für eine detaillierte Aussage über die Verteilcharakteristik müssen daher viele Sensoren verwendet werden. Es muss also jeweils ein vergleichsweise großer Aufwand betrieben werden, um ein zufriedenstellendes Ergebnis zu erzielen.

In der EP 2 777 376 A2 wird die Regelung des Abwurfwinkels zudem entsprechend weiterer Parameter wie Typ der Streuscheibe oder Wurfschaufel vorgenommen. In der EP 2 756 745 A1 wird ein Verfahren zur Ermittlung der Verteilung eines Gutstroms mittels Mikrowellen, eine Sensoranordnung und die entsprechende Vorrichtung offenbart.

Das zu lösende Problem des Standes der Technik besteht also darin, dass zur Detektion der Verteilcharakteristik eines Schleuderstreuers viele Datenpunkte mit zumindest einem oder jeweils zumindest ein Datenpunkt mit vielen Sensoren aufgenommen werden muss, um die Verteilcharakteristik eines Schleuderstreuers zu bestimmen, was einen großen konstruktiven Aufwand und/oder Zeitaufwand bedeutet.

Aufgabe der vorliegenden Erfindung ist es daher vorgenannte Probleme des Standes der Technik zu lösen und auf einfache Weise die Verteilcharakteristik eines Schleuderstreuers zu bestimmen.

Dies wird durch ein Verfahren zur Bestimmung der Verteilcharakteristik einer Verteilmaschine gemäß dem Patentanspruch 1 erreicht, wobei mittels Sensoren für jede Schleuderscheibe ein mittlerer horizontaler Abwurfwinkel des Streugutes detektiert und darüber hinaus zumindest ein Wert bestimmt wird, welcher die Querverteilung des verteilten Streugutes und/oder die Varianz des Abwurfwinkels charakterisiert und zusätzlich die mittlere Wurfweite sowie zumindest ein die Varianz der Wurfweite charakterisierender Wert bestimmt wird und aus den vorgenannten Werten mittels in dem Speicher des Jobrechners oder Terminals hinterlegter Funktionen und/oder Graphen und/oder Tabellen die Flächenverteilung des verteilten Streugutes berechnet wird. Auf diese Weise lässt sich mittels weniger Sensoren, beispielsweise sind zwei Sensoren pro Schleuderscheibe für ein zufriedenstellendes Ergebnis ausreichend, die Verteilcharakteristik einer Schleuderscheibe vorhersagen bzw. berechnen. Dies geschieht auf der Basis von zumindest vier charakteristischen Werten, die vorzugsweise mittels der Radarsensoren sowie aus bekannten Parametern bestimmt werden:
1. Die Wurfweite, welche beispielsweise aus den bekannten Verteilparametern, Schleuderscheibengeometrie, Schleuderscheibendrehzahl, Aufgabepunkt des Streugutes auf die Schleuderscheibe und der Fluggeschwindigkeit bestimmt wird, wobei letztere vorzugsweise mittels Dopplermessung der Radarsensoren gewonnen werden kann.
2. Die Varianz der Wurfweite, welche ebenfalls aus bekannten Parametern sowie der Dopplermessung berechnet werden kann.
3. Der mittlere horizontale Abwurfwinkel, welcher dem mittleren Abflugwinkel des Streugutes von der Schleuderscheibe bezogen auf eine horizontale Linie, welche vom Zentrum der Schleuderscheibe ausgehend typischerweise entgegen der Fahrtrichtung verläuft, entspricht. Dieser wird ebenfalls mittels der Radarsensoren, typischerweise aus der Signalamplitude, gewonnen, wobei die Genauigkeit der Bestimmung des Abwurfwinkels mit der Anzahl zumindest annähernd nebeneinander angeordneter Sensoren zunimmt.
4. Die Varianz des mittleren Abwurfwinkels wird ebenfalls mittels der von den Sensoren gewonnen Daten bestimmt und ist ein Maß dafür wie konzentriert das Streugut unter einem Winkel, dem mittleren Abwurfwinkel, von der Schleuderscheibe abgegeben wird.

Wie sich in Laborversuchen gezeigt hat, lässt sich mittels dieser vier Werte sowie den Verteilparametern, insbesondere Menge des verteilten Streugutes, Schleuderscheibendrehzahl und Aufgabeort des Streugutes auf die Schleuderscheibe sowie geometrischen Parametern, wie vorzugsweise Maße von Schleuderscheiben und Wurfschaufeln, die Verteilcharakteristik sehr präzise vorhersagen. Beispielsweise wird bei konzentrischer Änderung des Aufgabepunktes des Streugutes die Lage des Streufächers lediglich um das Zentrum der Schleuderscheibe gedreht werden.

Es ist überdies denkbar weitere Parameter in die Simulation einzubeziehen. Hierbei sind insbesondere Lagedaten der Verteilmaschine wie Höhe und Neigung oder Geschwindigkeitsdaten denkbar, welche durch Sensoren an der Verteilmaschine oder der landwirtschaftlichen Zugmaschine gewonnen werden können. Zudem können Wetterdaten, insbesondere Windrichtung und Geschwindigkeit, in die Berechnungen einfließen, welche mittels geeigneter Sensoren oder durch drahtlose Übertragung gewonnen werden können.

Erfindungsgemäß wird die mittlere Wurfweite sowie deren Varianz aus Schleuderparametern, wie vorzugsweise Geometrie der Wurfschaufeln und Schleuderscheiben sowie Schleuderscheibendrehzahl und Aufgabepunkt des Streugutes auf die Schleuderscheibe und/oder die Rutscheigenschaften des Streugutes charakterisierenden Parametern sowie der Fluggeschwindigkeit des Streugutes, welche mittels zumindest einem berührungslos arbeitenden Sensor, vorzugsweise Radarsensor, bestimmt werden, berechnet. Auf diese Weise kann die Wurfweite aus der Änderung der Fluggeschwindigkeit zwischen den beiden Orten berechnet werden, ohne dass düngerspezifische Parameter, wie beispielsweise ein Faktor K, welcher den Luftwiderstand der Streugutteilchen beschreibt, bekannt sein müssen.

In einer alternativen Ausgestaltung der Erfindung wird die mittlere Wurfweite sowie deren Varianz aus zumindest zwei Werten der Fluggeschwindigkeit des Streugutes berechnet wird, welche mittels zumindest zweier berührungslos arbeitender Sensoren, vorzugsweise Radarsensoren, bestimmt wird, welche die Geschwindigkeit des Streugutes in unterschiedlichen Flugphasen, also unterschiedlichen Abständen von der Verteilmaschine messen. Sind also an der Verteilmaschine zwei berührungslos arbeitende Sensoren vorhanden, welche eine Detektion der Streugutpartikel in unterschiedlichen Flugphasen, das heißt unterschiedlichen Abständen von der Verteilmaschine ermöglichen, vorhanden, so lässt sich damit eine präzise Berechnung der mittleren Wurfweite erreichen, wiederum ohne dass düngerspezifische Parameter, wie beispielsweise ein Faktor K, welcher den Luftwiderstand der Streugutteilchen beschreibt, bekannt sein müssen. Es ist auch möglich diese Ausgestaltung als Ergänzung zu der vorgenannten Ausgestaltung zu betreiben, um eine noch präzisere Bestimmung der Wurfweite zu erreichen.

In einer vorteilhaften Weiterbildung wird die berechnete Querverteilung des Streugutes auf einer geeigneten Anzeigevorrichtung, vorzugsweise auf einer landwirtschaftlichen Zugmaschine, dem Bedienpersonal der Verteilmaschine angezeigt wird. Somit ist eine vollständige Kontrolle des Verteilvorganges durch das Bedienpersonal möglich. Abweichend vom Stand der Technik kann so nicht nur eine schematische Darstellung des Verteilbereiches des Streugutes stattfinden, welche lediglich einen standardisierten Streufächer anzeigt, welcher lediglich in Abhängigkeit von beispielsweise dem Aufgabepunkt des Streugutes gedreht wird sondern die Lage des Streufächers und seine Geometrie werden an Hand der gemessenen Streucharakteristik detailliert berechnet und dargestellt.

In einer vorteilhaften Ausgestaltung der Erfindung wird eine mittlere Wurfweite und/oder ein mittlerer horizontaler Abwurfwinkel und/oder ein Variationskoeffizient der Wurfweite und/oder ein Variationskoeffizient des horizontalen Abwurfwinkels und/oder ein die Querverteilung charakterisierender Wert dem Bedienpersonal auf einer geeigneten Anzeigevorrichtung, vorzugsweise auf einer landwirtschaftlichen Zugmaschine und vorzugsweise einzeln für jede Schleuderscheibe, angezeigt. Somit kann das geschulte Bedienpersonal an Hand dieser charakteristischen Werte bereits einschätzen, ob die derzeitige Verteilcharakteristik den derzeit vorliegenden Anforderungen entspricht oder ob die Einstellparameter der Verteilmaschine angepasst werden müssen. Diese Darstellung kann auch als Ergänzung zu der vorgenannten Ausgestaltung vorgenommen werden.

In einer vorteilhaften Weiterbildung der Erfindung wird die berechnete Querverteilung verwendet, um Einstellparameter der Verteilmaschine zu justieren, insbesondere die Drehzahl der Schleuderscheiben, die Position der Wurfschaufeln, die Position eines Dosierschiebers und damit die Aufgabemenge des Streugutes auf die Schleuderscheibe und/oder die Position des Aufgabeortes des Streugutes auf die Schleuderscheibe. Somit werden die Einstellparameter während des Verteilprozesses laufend von dem verwendeten Jobrechner und/oder Terminal überwacht und die Einstellparameter der Verteilmaschine entsprechend der aktuell vorliegenden Verteilcharakteristik angepasst und optimiert.

In einer vorteilhaften Weiterbildung der Erfindung ist die Position von zumindest einem Begrenzungsblech und/oder Leitblech für zumindest eine Schleuderscheibe bekannt und erfolgt die Einstellung der Einstellparameter zur Anpassung der Querverteilung derart, dass maximal ein voreingestellter und/oder wählbarer Anteil des verteilten Streugutes der jeweiligen Schleuderscheibe, vorzugsweise maximal 5 %, mit dem jeweiligen Leitblech kollidiert. Die Einstellparameter der Verteilmaschine werden also automatisch entsprechend der jeweiligen Anforderungen an die Geometrie der Verteilmaschine angepasst.

In einer vorteilhaften Weiterbildung der Erfindung wird die Überlappung der Verteilbereiche der beiden Schleuderscheiben detektiert und werden die Einstellparameter derart justiert, dass unter Berücksichtigung der Überlappung der Verteilbereiche verschiedener Fahrspuren die Bedeckung der bearbeiteten Fläche mit Streugut, insbesondere in Randbereichen der landwirtschaftlichen Fläche, nach Beendigung des Verteilprozesses möglichst gleichmäßig ist. Auf diese Weise wird die Verteilcharakteristik mittels wiederholter Messung und Bestimmung der Verteilcharakteristik sowie Einstellung der Einstellparameter der Verteilmaschine so angepasst, dass stets die gewünschte Applikationsrate bei der Verteilung des Streugutes vorliegt.

Die Erfindung beinhaltet darüber hinaus einen unabhängigen Anspruch betreffend eine Verteilmaschine zur Durchführung des erfindungsgemäßen Verfahrens gemäß dem Patentanspruch 7, wobei mittels der Sensoren für jede Schleuderscheibe ein mittlerer horizontaler Abwurfwinkel des Streugutes detektiert und darüber hinaus zumindest ein Wert bestimmt wird, welcher die Querverteilung des verteilten Streugutes und/oder die Varianz des Abwurfwinkels charakterisiert und zusätzlich die mittlere Wurfweite sowie zumindest ein die Varianz der Wurfweite charakterisierender Wert bestimmt wird und aus den vorgenannten Werten mittels in dem Speicher des Jobrechners oder Terminals hinterlegter Funktionen und/oder Graphen und/oder Tabellen die Flächenverteilung des verteilten Streugutes berechnet wird. Zudem werden weitere abhängige Weiterbildungen beansprucht.

Die beanspruchten Ausgestaltungen verwenden zur Berechnung der Verteilcharakteristik die Varianz der Größen mittlere Wurfweite und/oder mittlerer horizontaler Abwurfwinkel. Es ist ebenso ohne Nachteil möglich statt der Varianz einen Variationskoeffizienten für die Berechnung der Verteilcharakteristik zu verwenden, welcher ein Maß für die relative Streuung ist, während die Varianz die absolute Streuung angibt. Im vorliegenden Fall müsste die Varianz der Wurfweite beispielsweise durch die Wurfweite selbst geteilt werden, um den entsprechenden Variationskoeffizienten zu erhalten, was einem zusätzlichen Berechnungsschritt entspricht.

Weitere Einzelheiten der Erfindung sind der Beispielsbeschreibung und den Zeichnungen zu entnehmen. Hierbei zeigen
- Fig. 1: schematisch die Anordnung der Schleuderscheibe und den ihr zugeordneten Sensoren zur Detektion des verteilten Streugutes,
- Fig. 2: ein Diagramm zur Bestimmung des horizontalen Abwurfwinkels und seiner Varianz,
- Fig. 3: ein Diagramm zur Bestimmung der mittleren Geschwindigkeit der abgeworfenen Streugutpartikel und ihrer Varianz aus einer Dopplermessung eines der Sensoren und
- Fig. 4: schematische Darstellung einer berechneten Verteilcharakteristik relativ zu einer Schleuderscheibe.

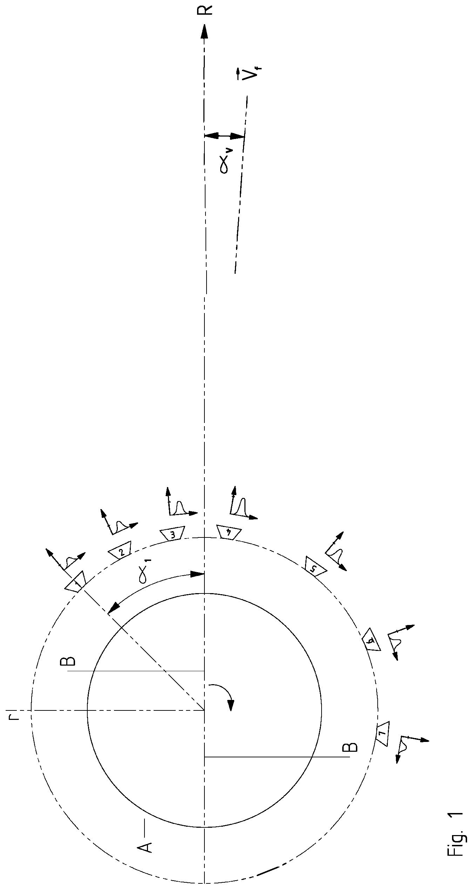

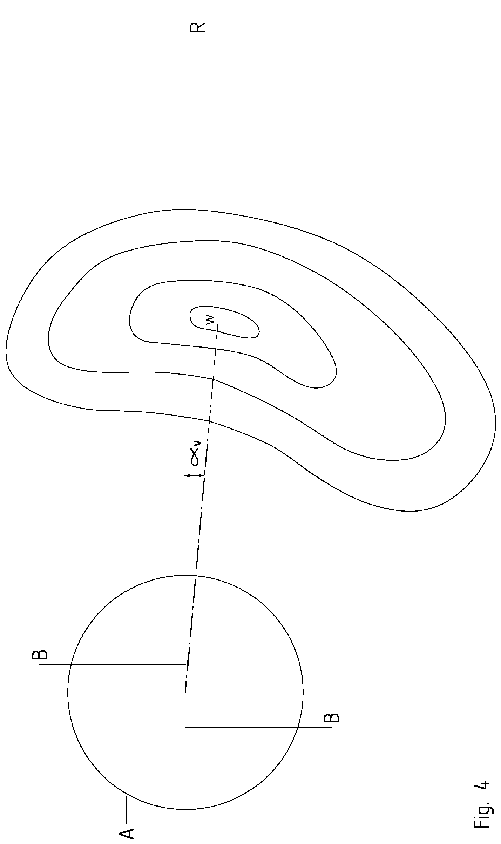

Das erfindungsgemäße Verfahren sowie mögliche bevorzugte Ausgestaltungen einer erfindungsgemäßen Verteilmaschine werden in schematischer Darstellung in den Fig. 1 und 4 dargestellt. Der Klarheit wegen wurden konstruktive Details, welche für die Darstellung der Erfindung unerheblich, für das Funktionieren der Verteilmaschine aber unerlässlich sind, weggelassen. Um die Klarheit der Darstellung zu wahren ist insbesondere das abgeworfene Streugut in den Figuren 1 und 4 nicht dargestellt.

Fig. 1 zeigt schematisch eine Schleuderscheibe A und zwei auf ihr angeordnete Wurfschaufeln B. Außerdem ist die bevorzugte Rotationsrichtung der Scheibe angedeutet. Im Abstand r von der Schleuderscheibe sind mindestens zwei berührungslos arbeitende Sensoren, vorzugsweise Radarsensoren, angeordnet. Im vorliegenden Ausführungsbeispiel handelt es sich um sieben berührungslos arbeitende Sensoren, welche jeweils im Abstand r zum Zentrum der Schleuderscheibe auf einer Verbindungslinie zum Zentrum der Schleuderscheibe angeordnet sind, welche verschiedene Winkel α₁ - α₇ mit einer entgegen der Fahrtrichtung durch den Mittelpunkt der Schleuderscheibe verlaufenden Achse R in unterschiedlichen Winkeln einschließen. Die Sensoren sind derart angeordnet, dass sie die Bewegung des abgeworfenen Streugutes nicht behindern, also vorzugsweise oberhalb oder unterhalb des vorbeifliegenden Streugutes und in einem Abstand r von vorzugsweise ungefähr 0,5 m vom Zentrum der Schleuderscheibe entfernt. Zudem sind die Sensoren derart angeordnet, dass der Bereich des Kreisumfangssegmentes ungefähr im Abstand r zu der Schleuderscheibe bevorzugt erfasst wird, der von dem abgeworfenen Streugut bevorzugt passiert wird. Den dargestellten Sensoren 1 - 7 ist entsprechend in der Fig. 1 ein schematisches Diagramm mit einer Kurve einer entsprechenden Dopplermessung zugeordnet. Wie bereits aus den Diagrammen ersehen werden kann, hat das abgeworfene Streugut bevorzugt den Messbereich des sich in der Mitte der Anordnung befindlichen Sensors 4 in Richtung v_{F} unter dem Winkel α_{V} zur Achse R passiert, da dort die größte Signalamplitude A₄ gemessen wurde. Die Signalamplitude wird entsprechend zu den am Rand der Sensoranordnung befindlichen Sensoren 7 und 1 kleiner.

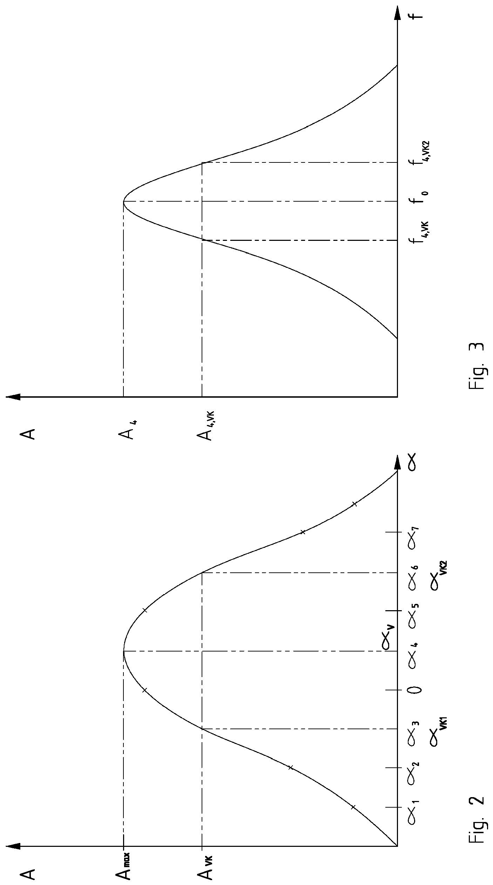

In Fig. 2 dargestellt ist ein Diagramm welches die Bestimmung des Abwurfwinkels sowie dessen Varianz erlaubt. Hierbei wurden die Amplituden einer zumindest annähernd zeitgleich mit allen sieben Sensoren durchgeführten Messung gegen den jeweiligen Winkel α aufgetragen und eine entsprechende Verteilungskurve interpoliert. An dem Maximum dieser Kurve kann nun der mittlere Abwurfwinkel α_{V} abgelesen werden, welcher in diesem Beispiel dem Winkel α₄ entspricht. Alternativ könnte in dem vorliegenden Diagramm statt der Amplitude der einzelnen Messkurven deren Integral, also die Fläche unter der Kurve, aufgetragen werden. Dies wäre ein präziseres Maß für die Anzahl der Streugutpartikel, die sich an dem Sensor vorbeibewegt haben, jedoch ist eine derartige Integralbildung erheblich aufwendiger und führt nicht zu wesentlich präziseren Ergebnissen. Neben dem mittleren Abwurfwinkel kann aus dem Diagramm zudem die Varianz des mittleren Abwurfwinkels um α_{V} als Differenz α_{VK2} - α_{VK2} bestimmt werden, welche jeweils durch eine im Vergleich zur maximal Amplitude der Kurve Aₘₐₓ reduzierte Amplitude A_{VK} bestimmt sind, wobei die Differenzen α_{VK2}- α_{VK} und α_{VK} - α_{VK1} durchaus unterschiedlich sein können, wie besonders in Fig. 4 anhand der asymmetrischen Streuverteilung angedeutet ist.

Die Fluggeschwindigkeit der Streugutpartikel kann nun beispielsweise aus einer Dopplermessung der in Fig. 1 gezeigten Sensoren bestimmt werden. Hierfür wird ein Signal, vorzugsweise ein Radarsignal, von den Sensoren ausgesendet und von den Streugutpartikeln während der Bewegung reflektiert und/oder gestreut. Die Frequenz der reflektierten Signale ist abhängig von der Bewegungsrichtung und Frequenz der Streugutpartikel. Bei bekannter Orientierung der Streugutpartikel und deren Bewegungsrichtung relativ zum Sensor kann so die Geschwindigkeit bestimmt werden. In Fig. 3 ist beispielsweise eine Messung gezeigt, die dem Sensor 4 zuzuordnen ist. Die Amplitude des detektierten Messsignals ist gegen seine Frequenz aufgetragen. Die größte Amplitude A₄ des Signals befindet sich nun bei der Frequenz f₀, welche der Geschwindigkeit entspricht, welche bei den Streugutpartikeln bevorzugt zu finden war, während sie den Messbereich des betreffenden Sensors passiert haben. Analog zu dem Vorgehen in Fig. 2 kann zudem die Varianz bestimmt werden aus den Frequenzen f_{4,VK1} und f_{4,VK2}, welche bei entsprechend reduzierter Amplitude A_{4,VK} abgelesen werden können.

Aus der mittleren Geschwindigkeit kann nun die mittlere Wurfweite bestimmt werden. Hierfür sind jedoch zusätzlich Angaben notwendig. Es werden Angaben zum Ort der Messung relativ zur Schleuderscheibe benötigt. Zusätzlich sind entweder Angaben zum Flugverhalten der Streugutpartikel erforderlich, um die Flugbahn und damit die Wurfweite bestimmen zu können. Alternativ ist ein zweiter Geschwindigkeitswert der Streugutpartikel notwendig, aufgenommen zu einem früheren oder späteren Zeitpunkt der Flugbewegung und wiederum in bekanntem Abstand von der Schleuderscheibe, um aus der Geschwindigkeitsdifferenz auf die mittlere Wurfweite und deren Varianz schließen zu können. Alternativ kann auch aus den Verteilparametern, wie Schleuderscheibendrehzahl, Aufgabepunkt des Streugutes auf die Schleuderscheibe und der Geometrie von Schleuderscheibe und Wurfschaufeln eine zweite Geschwindigkeit nämlich die Abwurfgeschwindigkeit und daraus die mittlere Wurfweite sowie deren Varianz bestimmt werden. Die mittels der im Abstand r von der Schleuderscheibe angeordneten Sensoren bestimmte mittlere Wurfweite ist für die Sensoren sehr ähnlich. Es ist daher ausreichend ein einziges Signal auszuwerten, um die mittlere Wurfweite zu bestimmen. Die Auswertung aller sieben Sensorsignale zur Bestimmung der mittleren Wurfweite ist jedoch zur Erhöhung der Genauigkeit möglich. Gleiches gilt für die Varianz der mittleren Wurfweite. Erwartete und durch Laborversuche quantifizierte Abweichungen zwischen den Sensoren bei mittlerer Wurfweite und deren Varianz sowie der qualitative Verlauf der Querverteilung vom mittleren Abwurfwinkel zu den Rändern hin führen zu der bekannten qualitativen Nierenform die in Fig. 4 dargestellt ist und deren quantitative Abhängigkeit von der mittleren Wurfweite, deren Varianz sowie dem mittleren Abwurfwinkel und dessen Varianz sowie den bekannten Streuparametern, wie Ausbringmenge für eine präzise Simulation aus Laborversuchen bestimmt werden muss.

Die Verteilcharakteristik kann nun aus den bestimmten Werten für die Wurfweite und den Abwurfwinkel sowie deren Varianzen berechnet werden und beispielsweise wie in Fig. 4 dargestellt dem Bedienpersonal der Verteilmaschine auf einer geeigneten Anzeigevorrichtung relativ zur Schleuderscheibe A dargestellt werden, wobei vorzugsweise zusätzlich die mittlere Wurfweite W und der mittlere Abwurfwinkel α_{V} relativ zur Schleuderscheibe sowie jeweils deren Varianz und/oder Variationskoeffizient angegeben sein kann. Bei der gezeigten Verteilcharakteristik stellen in der dargestellten Form die Konturen Orte gleicher aufgebrachter Menge dar. Dies kann in der Darstellung beispielsweise auch farblich aufgeschlüsselt sein. Auch können bei Verteilmaschinen mit mehreren Schleuderscheiben auch die Verteilcharakteristiken mehrerer Schleuderscheiben in geeigneter Weise gleichzeitig dargestellt werden.

Auch können erfindungsgemäß die bestimmten Werte für die mittlere Wurfweite und den mittleren Abwurfwinkel sowie weitere aus den gemessenen Daten oder insbesondere aus der berechneten Verteilcharakteristik extrahierte Werte zur automatischen Einstellung der Verteilmaschine insbesondere zur Optimierung der Gleichmäßigkeit des Verteilvorganges und/oder der Vermeidung der Kollision des Streugutes mit Teilen der Verteilmaschine verwendet werden.

## Patentansprüche

1. Verfahren zur Bestimmung der Verteilcharakteristik einer Verteilmaschine mit zumindest einer vorzugsweise zwei Schleuderscheiben (A) und darauf angeordneten vorzugsweise zwei Wurfschaufeln (B) zur Verteilung des Streugutes sowie einem auf einem Terminal oder Jobrechner der Verteilmaschine und/oder einer landwirtschaftlichen Zugmaschine gespeicherten Programm konfiguriert zur Bestimmung der Verteilcharakteristik des ausgebrachten Streugutes und zumindest einem beweglichen Sensor und/oder zumindest zwei relativ zur Verteilmaschine ortsfesten Sensoren (1-7), vorzugsweise Radarsensoren, für jede Schleuderscheibe (A) zur individuellen Detektion des horizontalen Abwurfwinkels des Streugutes für jede Schleuderscheibe (A), wobei
mittels des zumindest einen Sensors (1-7) für jede Schleuderscheibe A ein mittlerer horizontaler Abwurfwinkel (α_{V}) des Streugutes detektiert und darüber hinaus zumindest ein Wert bestimmt wird, welcher die Querverteilung des verteilten Streugutes und/oder die Varianz des Abwurfwinkels charakterisiert und zusätzlich die mittlere Wurfweite (W) sowie zumindest ein die Varianz der Wurfweite charakterisierender Wert bestimmt wird und aus den vorgenannten Werten mittels in dem Speicher des Jobrechners oder Terminals hinterlegter Funktionen und/oder Graphen und/oder Tabellen die Verteilcharakteristik des verteilten Streugutes berechnet wird **dadurch gekennzeichnet, dass**
die mittlere Wurfweite (W) sowie deren Varianz aus Schleuderparametern, wie vorzugsweise Geometrie der Wurfschaufeln (B) und Schleuderscheiben (A) sowie Schleuderscheibendrehzahl und Aufgabepunkt des Streugutes auf die Schleuderscheibe (A) und/oder die Rutscheigenschaften des Streugutes charakterisierenden Parametern sowie der Fluggeschwindigkeit (v_{F}) des Streugutes, welche mittels zumindest eines Sensors (1-7), vorzugsweise Radarsensors, bestimmt wird, berechnet wird oder die mittlere Wurfweite (W) sowie deren Varianz aus zumindest zwei Werten der Fluggeschwindigkeit des Streugutes berechnet wird, welche mittels zumindest zweier Sensoren, vorzugsweise Radarsensoren, bestimmt werden, welche die Geschwindigkeit des Streugutes in unterschiedlichen Flugphasen, also unterschiedlichen Abständen von der Verteilmaschine messen.

2. Verfahren nach Anspruch 1, **dadurch gekennzeichnet, dass** die berechnete Querverteilung des Streugutes auf einer geeigneten Anzeigevorrichtung, vorzugsweise auf einer landwirtschaftlichen Zugmaschine, dem Bedienpersonal der Verteilmaschine angezeigt wird.

3. Verfahren nach zumindest einem der Ansprüche 1 - 2, **dadurch gekennzeichnet, dass** eine mittlere Wurfweite (W) und/oder ein mittlerer horizontaler Abwurfwinkel α_{V} und/oder ein Variationskoeffizient der Wurfweite und/oder ein Variationskoeffizient des horizontalen Abwurfwinkels und/oder ein die Querverteilung charakterisierender Wert dem Bedienpersonal auf einer geeigneten Anzeigevorrichtung, vorzugsweise auf einer landwirtschaftlichen Zugmaschine und vorzugsweise einzeln für jede Schleuderscheibe (A), angezeigt wird.

4. Verfahren nach zumindest einem der Ansprüche 2 - 3, **dadurch gekennzeichnet, dass** die berechnete Querverteilung verwendet wird, um Einstellparameter der Verteilmaschine zu justieren, insbesondere die Drehzahl der Schleuderscheiben (A), die Position der Wurfschaufeln (B), die Position eines Dosierschiebers und damit die Aufgabemenge des Streugutes auf die Schleuderscheibe (A) und/oder die Position des Aufgabeortes des Streugutes auf die Schleuderscheibe (A).

5. Verfahren nach Anspruch 4, **dadurch gekennzeichnet, dass** die Position von zumindest einem Begrenzungsblech und/oder Leitblech für zumindest eine Schleuderscheibe bekannt ist und die Einstellung der Einstellparameter zur Anpassung der Querverteilung derart erfolgt, dass maximal ein voreingestellter und/oder wählbarer Anteil des verteilten Streugutes der jeweiligen Schleuderscheibe (A), vorzugsweise maximal 5 %, mit dem jeweiligen Leitblech kollidiert.

6. Verfahren nach Anspruch 4 bei einer Verteilmaschine mit zwei Schleuderscheiben (A), **dadurch gekennzeichnet, dass** die Überlappung der Verteilbereiche der beiden Schleuderscheiben (A) detektiert wird und die Einstellparameter derart justiert werden, dass unter Berücksichtigung der Überlappung der Verteilbereiche verschiedener Fahrspuren die Bedeckung der bearbeiteten Fläche mit Streugut, insbesondere in Randbereichen der landwirtschaftlichen Fläche, nach Beendigung des Verteilprozesses möglichst gleichmäßig ist.

7. Verteilmaschine zur Durchführung des Verfahrens nach einem der vorangegangenen Ansprüche mit zumindest einer vorzugsweise zwei Schleuderscheiben (A) und darauf angeordneten vorzugsweise zwei Wurfschaufeln (B) zur Verteilung des Streugutes sowie einem auf einem Terminal oder Jobrechner der Verteilmaschine und/oder einer landwirtschaftlichen Zugmaschine gespeicherten Programm konfiguriert zur Bestimmung der Verteilcharakteristik des ausgebrachten Streugutes und zumindest einem beweglichen Sensor und/oder zumindest zwei relativ zur Verteilmaschine ortsfesten Sensoren (1-7), vorzugsweise Radarsensoren, für jede Schleuderscheibe (A) zur individuellen Detektion des horizontalen Abwurfwinkels des Streugutes für jede Schleuderscheibe (A), wobei
mittels des zumindest einen Sensors (1-7) für jede Schleuderscheibe (A) ein mittlerer horizontaler Abwurfwinkel (α_{V}) des Streugutes detektiert wird und darüber hinaus das Programm zur Bestimmung der Verteilcharakteristik derart konfiguriert ist, dass zumindest ein Wert bestimmt wird, welcher die Querverteilung des verteilten Streugutes und/oder die Varianz des Abwurfwinkels charakterisiert und zusätzlich die mittlere Wurfweite (W) sowie zumindest ein die Varianz der Wurfweite charakterisierender Wert bestimmt wird und aus den vorgenannten Werten mittels in dem Speicher des Jobrechners oder Terminals hinterlegter Funktionen und/oder Graphen und/oder Tabellen die Verteilcharakteristik des verteilten Streugutes berechnet wird,
**dadurch gekennzeichnet, dass** die mittlere Wurfweite (W) sowie deren Varianz aus Schleuderparametern, wie vorzugsweise Geometrie der Wurfschaufeln (B) und Schleuderscheiben (A) sowie Schleuderscheibendrehzahl und Aufgabepunkt des Streugutes auf die Schleuderscheibe und/oder die Rutscheigenschaften des Streugutes charakterisierenden Parametern sowie der Fluggeschwindigkeit des Streugutes, welche mittels des zumindest einen Sensors (1-7), vorzugsweise Radarsensor, bestimmt wird, berechnet wird oder dass die mittlere Wurfweite (W) sowie deren Varianz aus zumindest zwei Werten der Fluggeschwindigkeit des Streugutes berechnet wird, welche mittels zumindest zweier Sensoren, vorzugsweise Radarsensoren, bestimmt wird, welche die Geschwindigkeit des Streugutes in unterschiedlichen Flugphasen, also unterschiedlichen Abständen von der Verteilmaschine messen.

8. Verteilmaschine nach Anspruch 7, **dadurch gekennzeichnet, dass** die berechnete Querverteilung verwendet wird, um Einstellparameter der Verteilmaschine zu justieren, insbesondere die Drehzahl der Schleuderscheiben (A), die Position der Wurfschaufeln (B), die Position eines Dosierschiebers und damit die Aufgabemenge des Streugutes auf die Schleuderscheibe (A) und/oder die Position des Aufgabeortes des Streugutes auf die Schleuderscheibe (A).

## Claims

1. Method for determining the distribution characteristic of a distribution machine, having at least one centrifugal disc (A), preferably two centrifugal discs (A) and preferably two thrower blades (B) arranged thereon for distributing the spreading material, and a program which is stored on a terminal or job computer of the distribution machine and/or an agricultural tractor machine, configured to determine the distribution characteristic of the discharged spreading material and at least one movable sensor and/or at least two sensors (1-7), preferably radar sensors, which are positionally fixed relative to the distribution machine, for each centrifugal disc (A) for the individual detection of the horizontal ejection angle of the spreading material for each centrifugal disc (A), wherein an average horizontal ejection angle (αᵥ) of the spreading material is detected by means of the at least one sensor (1-7) for each centrifugal disc (A) and furthermore at least one value which characterizes the transverse distribution of the distributed spreading material and/or the variance of the ejection angle is determined, and in addition the average throwing range (W) as well as least one value which characterizes the variance of the throwing range, and the distribution characteristic of the distributed spreading material is calculated from the abovementioned values by means of functions and/or graphs and/or tables which are stored in the memory of the job computer or terminal, **characterized in that** the average throwing range (W) and the variance thereof is calculated from centrifugal parameters such as preferably the geometry of the throwing blades (B) and centrifugal discs (A) as well as the centrifugal disc rotational speed and application point of the spreading material onto the centrifugal disc (A) and/or parameters which characterize the slipping properties of the spreading material, as well as the flying speed (v_{F}) of the spreading material which is determined by means of at least one sensor (1-7), preferably a radar sensor, or the average throwing range (W) and the variance thereof are calculated from at least two values of the flying speed of the spreading material which are determined by means of at least two sensors, preferably a radar sensor, which measure the speed of the spreading material in different flying phases, that is to say at different distances from the distribution machine.

2. Method according to Claim 1, **characterized in that** the calculated transverse distribution of the spreading material is displayed to the operating personnel of the distribution machine on a suitable display device, preferably on an agricultural tractor machine.

3. Method according to at least one of Claims 1-2, **characterized in that** an average throwing range (W) and/or an average horizontal ejection angle aᵥ and/or a variation coefficient of the throwing range and/or a variation coefficient of the horizontal ejection angle and/or a value which characterizes the transverse distribution is displayed to the operating personnel on a suitable display device, preferably on an agricultural tractor machine, and preferably individually for each centrifugal disc (A).

4. Method according to at least one of Claims 2-3, **characterized in that** the calculated transverse distribution is used to adjust setting parameters of the distribution machine, in particular the rotational speed of the centrifugal discs (A), the position of the throwing blades (B), the position of a metering slide and therefore the quantity of the spreading material which is applied to the centrifugal disc (A) and/or the position of the location at which the spreading material is applied to the centrifugal disc (A).

5. Method according to Claim 4, **characterized in that** the position of at least one boundary plate and/or guide plate for at least one centrifugal disc is known, and the setting of the setting parameters for adapting the transverse distribution is carried out in such a way that at maximum a pre-set and/or selectable portion of the distributed spreading material of the respective centrifugal disc (A), preferably at maximum 5%, collides with the respective guide plate.

6. Method according to Claim 4 in a distribution machine having two centrifugal discs (A), **characterized in that** the overlap of the distribution regions of the two centrifugal discs (A) is detected, and the setting parameters are adjusted in such a way that by taking into account the overlap of the distribution regions with different travel lanes, the coverage of the processed area with spreading material, in particular in edge regions of the agricultural area, after the ending of the distribution process is as uniform as possible.

7. Distribution machine for carrying out the method according to one of the preceding claims, having at least one centrifugal disc (A), preferably two centrifugal discs (A) and preferably two thrower blades (B) arranged thereon for distributing the spreading material, and a program which is stored on a terminal or job computer of the distribution machine and/or an agricultural tractor machine, configured to determine the distribution characteristic of the discharged spreading material and at least one movable sensor and/or at least two sensors (1-7), preferably radar sensors, which are positionally fixed relative to the distribution machine, for each centrifugal disc (A) for the individual detection of the horizontal ejection angle of the spreading material for each centrifugal disc (A), wherein an average horizontal ejection angle (αᵥ) of the spreading material is detected by means of the at least one sensor (1-7) for each centrifugal disc (A) and furthermore the program for determining the distribution characteristic is configured such that at least one value which characterizes the transverse distribution of the distributed spreading material and/or the variance of the ejection angle is determined, and in addition the average throwing range (W) as well as least one value which characterizes the variance of the throwing range is determined, and the distribution characteristic of the distributed spreading material is calculated from the abovementioned values by means of functions and/or graphs and/or tables which are stored in the memory of the job computer or terminal, **characterized in that** the average throwing range (W) and the variance thereof is calculated from centrifugal parameters such as preferably the geometry of the throwing blades (B) and centrifugal discs (A) as well as the centrifugal disc rotational speed and application point of the spreading material onto the centrifugal disc (A) and/or parameters which characterize the slipping properties of the spreading material, as well as the flying speed of the spreading material which is determined by means of at least one sensor (1-7), preferably a radar sensor, or **in that** the average throwing range (W) and the variance thereof are calculated from at least two values of the flying speed of the spreading material which is determined by means of at least two sensors, preferably radar sensors, which measure the speed of the spreading material in different flying phases, that is to say at different distances from the distribution machine.

8. Distribution machine according to Claim 7, **characterized in that** the calculated transverse distribution is used to adjust setting parameters of the distribution machine, in particular the rotational speed of the centrifugal discs (A), the position of the throwing blades (B), the position of a metering slide and therefore the quantity of the spreading material which is applied to the centrifugal disc (A) and/or the position of the location at which the spreading material is applied to the centrifugal disc (A).

## Revendications

1. Procédé de détermination de la caractéristique d'épandage d'un épandeur comportant au moins un, de préférence deux disques centrifuges (A) et de préférence deux aubes de projection (B) disposées sur celui-ci pour épandre le produit à épandre, ainsi qu'un programme stocké sur un terminal ou un ordinateur de tâches de l'épandeur et/ou d'un tracteur agricole, lequel programme est configuré pour déterminer la caractéristique d'épandage du produit à épandre délivré, et au moins un capteur mobile et/ou au moins deux capteurs (1-7) fixes par rapport à l'épandeur, de préférence des capteurs radar, pour chaque disque centrifuge (A) pour la détection individuelle de l'angle de projection horizontal du produit à épandre pour chaque disque centrifuge (A),
dans lequel ledit au moins un capteur (1-7) permet pour chaque disque centrifuge A de détecter un angle de projection horizontal moyen (αᵥ) du produit à épandre, et en outre, de déterminer au moins une valeur qui caractérise la répartition transversale du produit à épandre épandu et/ou la variance de l'angle de projection, et par ailleurs, la distance de projection moyenne (W) ainsi qu'au moins une valeur caractérisant la variance de la distance de projection sont déterminées, et la caractéristique d'épandage du produit à épandre est calculée à partir des valeurs précitées au moyen de fonctions et/ou de graphes et/ou de tables enregistrés dans la mémoire de l'ordinateur de tâches ou du terminal,
**caractérisé en ce que** la distance de projection moyenne (W) ainsi que sa variance sont calculées à partir de paramètres centrifuges, tels que de préférence la géométrie des aubes de projection (B) et des disques centrifuges (A) ainsi que la vitesse de rotation des disques centrifuges et le point de délivrance du produit à épandre sur le disque centrifuge (A) et/ou des paramètres caractérisant les propriétés de glissement du produit à épandre ainsi que la vitesse de vol (v_{F}) du produit à épandre, qui est déterminée au moyen d'au moins un capteur (1-7), de préférence un capteur radar, ou **en ce que** la distance moyenne de projection (W) ainsi que sa variance sont calculées à partir d'au moins deux valeurs de la vitesse de vol du produit à épandre, qui sont déterminées au moyen d'au moins deux capteurs, de préférence des capteurs radar, qui mesurent la vitesse du produit à épandre dans différentes phases de vol, c'est-à-dire à des distances différentes de l'épandeur.

2. Procédé selon la revendication 1, **caractérisé en ce que** la répartition transversale calculée du produit à épandre est présentée sur un dispositif d'affichage approprié, de préférence sur un tracteur agricole, au personnel opérateur de l'épandeur.

3. Procédé selon au moins l'une des revendications 1 - 2, **caractérisé en ce qu'**une distance de projection moyenne (W) et/ou un angle de projection horizontal moyen αᵥ et/ou un coefficient de variation de la distance de projection et/ou un coefficient de variation de l'angle de projection horizontal et/ou une valeur caractérisant la répartition transversale est/sont présenté(s) au personnel opérateur sur un dispositif d'affichage approprié, de préférence sur un tracteur agricole et de préférence individuellement pour chaque disque centrifuge (A).

4. Procédé selon au moins l'une des revendications 2 à 3, **caractérisé en ce que** la répartition transversale calculée est utilisée pour régler des paramètres de réglage de l'épandeur, en particulier la vitesse de rotation des disques centrifuges (A), la position des aubes de projection (B), la position d'un tiroir doseur et par conséquent la quantité délivrée du produit à épandre sur le disque centrifuge (A) et/ou la position du point de délivrance du produit à épandre sur le disque centrifuge (A).

5. Procédé selon la revendication 4, **caractérisé en ce que** la position d'au moins une plaque de délimitation et/ou de guidage pour au moins un disque centrifuge est connue et **en ce que** le réglage des paramètres de réglage afin d'adapter la répartition transversale est effectué de telle sorte qu'une proportion maximale préréglée et/ou sélectionnable du produit à épandre épandu du disque centrifuge (A) respectif, de préférence au maximum 5 %, vienne frapper la plaque de guidage respective.

6. Procédé selon la revendication 4 dans le cas d'un épandeur comportant deux disques centrifuges (A), **caractérisé en ce que** le chevauchement des zones d'épandage des deux disques centrifuges (A) est détecté et **en ce que** les paramètres de réglage sont réglés de telle sorte que, compte tenu du chevauchement des zones d'épandage des différentes voies d'épandage, la surface traitée avec le produit d'épandage, en particulier dans les zones de lisière de la surface agricole, soit aussi uniforme que possible après l'achèvement du processus d'épandage.

7. Épandeur destiné à mettre en oeuvre le procédé selon l'une des revendications précédentes, comportant au moins un, de préférence deux disques centrifuges (A) et de préférence deux aubes de projection (B) disposées sur ceux-ci pour épandre le produit à épandre, ainsi qu'un programme stocké sur un terminal ou un ordinateur de tâches de l'épandeur et/ou d'un tracteur agricole, lequel programme est configuré pour déterminer la caractéristique d'épandage du produit à épandre délivré et au moins un capteur mobile et/ou au moins deux capteurs (1-7) fixes par rapport à l'épandeur, de préférence des capteurs radar, pour chaque disque centrifuge (A) pour la détection individuelle de l'angle de projection horizontal du produit à épandre pour chaque disque centrifuge (A), dans lequel ledit au moins un capteur (1-7) permet pour chaque disque centrifuge (A) de détecter un angle de projection horizontal moyen (αᵥ) du produit à épandre, et en outre, de déterminer au moins une valeur qui caractérise la répartition transversale du produit à épandre épandu et/ou la variance de l'angle de projection, et par ailleurs, la distance de projection moyenne (W) ainsi qu'au moins une valeur caractérisant la variance de la distance de projection sont déterminées, et la caractéristique d'épandage du produit à épandre est calculée à partir des valeurs précitées au moyen de fonctions et/ou de graphes et/ou de tables enregistrés dans la mémoire de l'ordinateur de tâches ou du terminal,
**caractérisé en ce que** la distance de projection moyenne (W) ainsi que sa variance sont calculées à partir de paramètres centrifuges, tels que de préférence la géométrie des aubes de projection (B) et des disques centrifuges (A) ainsi que la vitesse de rotation des disques centrifuges et le point de délivrance du produit à épandre sur le disque centrifuge et/ou des paramètres caractérisant les propriétés de glissement du produit à épandre ainsi que la vitesse de vol du produit à épandre, qui est déterminée au moyen d'au moins un capteur (1-7), de préférence un capteur radar, ou **en ce que** la distance moyenne de projection (W) ainsi que sa variance sont calculées à partir d'au moins deux valeurs de la vitesse du produit à épandre, qui sont déterminées au moyen d'au moins deux capteurs, de préférence des capteurs radar, qui mesurent la vitesse du produit à épandre dans différentes phases de vol, c'est-à-dire à des distances différentes de l'épandeur.

8. Épandeur selon la revendication 7, **caractérisé en ce que** la répartition transversale calculée est utilisée pour régler des paramètres de réglage de l'épandeur, en particulier la vitesse de rotation des disques centrifuges (A), la position des aubes de projection (B), la position d'un tiroir doseur et par conséquent la quantité délivrée du produit à épandre sur le disque centrifuge (A) et/ou la position du point de délivrance du produit à épandre sur le disque centrifuge (A).
